# EUROPÄISCHE PATENTANMELDUNG

(11) **EP 2 913 553 A2**
(43) Veröffentlichungstag der Anmeldung: **02.09.2015**
(21) Anmeldenummer: 14197278.6
(22) Anmeldetag: 11.12.2014
(51) Int. Cl.: F16F 7/10, F03D 7/02

(54) **Schwingungsdämpfungsvorrichtung und Windkraftanlage mit Schwingungsdämpfungsvorrichtung**

(30) Priorität: 24.01.2014 DE 102014000779
(71) Anmelder: RWE Innogy GmbH, 45127 Essen (DE)
(72) Erfinder: Reiterer, Michael, 1020 Wien (AT); Matlock, Benjamin, 20259 Hamburg (DE); Bartminn, Daniel, 25335 Elmshorn (DE)
(74) Vertreter: Kierdorf Ritschel

(57) **Zusammenfassung**

Die vorliegende Erfindung offenbart eine Schwingungsdämpfungsvorrichtung (10), die eine Lagereinrichtung (11) mit einer konkav geformten Abrollfläche (12, 13) und einen Rollkörper (14,15) umfasst. Der Rollkörper (14,15) ist auf der Abrollfläche (12, 13) der Lagereinrichtung (11) gelagert und zumindest in einer Bewegungsebene entlang der Abrollfläche (12, 13) beweglich. Ferner offenbart die vorliegende Erfindung eine Windkraftanlage mit einer entsprechend ausgebildeten Schwingungsdämpfungsvorrichtung (10).

## Beschreibung

Die Erfindung betrifft eine Schwingungsdämpfungsvorrichtung und eine Windkraftanlage mit einer Schwingungsdämpfungsvorrichtung. Die Schwingungsdämpfungsvorrichtung ist ferner für sämtliche Schwingungen ausgesetzte Strukturen geeignet und angepasst. Insbesondere ist die Schwingungsdämpfungsvorrichtung für Offshore Strukturen im Allgemeinen, so wie Messmasten, Offshore-Umspannwerke, Offshore-Förderplattformen für Öl und/oder Gas geeignet und angepasst. Ferner ist die Schwingungsdämpfungsvorrichtung für Brücken, Hochhäuser und Türme geeignet und angepasst.

Windkraftanlagen sind einer Vielzahl von Kräften ausgesetzt, die die Windkraftanlage in Schwingungen versetzten können. Die sich drehenden Rotoren können insbesondere bei einer vorliegenden Unwucht Schwingungen der Windkraftanlage hervorrufen. Auf die Windkraftanlage treffender Wind regt die Windkraftanlage ebenfalls zu Schwingungen an. Offshore-Windkraftanlagen sind weiteren Schwingungen anregenden Kräften ausgesetzt. So treffen Wellen auf die Gründungsstruktur und/oder auf den Turm der Windkraftanlage und regen diese zu Schwingungen an. Selbiges gilt für Gezeitenströmungen.

Mittels der Modalanalyse kann das dynamische Verhalten von schwingungsfähigen Systemen, also auch von Windkraftanlage, numerisch mittels Eigenschwingungsgrößen, der sogenannten modalen Parameter, charakterisiert werden. Die modalen Parameter sind die Eigenfrequenz, die Eigenschwingungsform, die modale Masse und die modale Dämpfung.

Nach Anregung einer körperlichen Struktur schwingt diese mit ihren Eigenfrequenzen. Selbiges gilt aufgrund der pfahlartigen Struktur insbesondere für Windkraftanlagen, die näherungsweise eingespannte Biegeschwinger darstellen. Dabei ist der Fuß des Windkraftanlagenturms an einer Gründungsstruktur befestigt, so dass die Windkraftanlage an ihrem Fuß eingespannt ist. Bei der Grundschwingung schwingt das freie Ende des Biegeschwingers mit der Grundfrequenz in einer Schwingungsebene, wobei keine Schwingungsknoten vorliegen. Bei der nächst höheren Eigenfrequenz schwingt die Windkraftanlage derart, dass ein Schwingungsknoten vorliegt, der zwischen dem Fuß und dem oberen Ende der Windkraftanlage positioniert ist. Diesen Eigenschwingungsformen sind jeweils modale Massen zugeordnet.

Wenn die Anregungsfrequenzen durch die oben beschriebenen Kräfte mit den Eigenfrequenzen der Windkraftanlage übereinstimmen oder sich diesen annähern, wird die Windkraftanlage teils resonant zu Schwingungen angeregt, so dass sich die Schwingungsamplituden während der Anregung vergrößern. Die Schwingungen belasten die Windkraftanlage, so dass diese entsprechend verstärkt werden muss, um diesen Belastungen standzuhalten. Beispielsweise kann die Struktur mittels entsprechender Materialauswahl und Materialstruktur steifer ausgestaltet werden. Ferner können Versteifungselemente vorgesehen sein. Zusätzlich können die Schwingungen der Struktur durch Schwingungsdämpfungsvorrichtungen reduziert werden.

Die EP 1 203 155 B1 offenbart einen Schwingungsdämpfer für Windturbinen. Der Schwingungsdämpfer umfasst ein mit einer Flüssigkeit gefüllten Volumen. Eine Schwingung der Windkraftanlage induziert eine entsprechende Ausgleichbewegung der Flüssigkeit im Schwingungsdämpfer, so dass die Schwingungsamplitude der Windkraftanlage reduziert wird. Die Masse der Flüssigkeit im Schwingungsdämpfer beträgt zwischen 0,6% und 6% der Masse der Windkraftanlagengondel.

Die der vorliegenden Erfindung zugrunde liegende Aufgabe ist die Bereitstellung einer verbesserten Schwingungsdämpfungsvorrichtung, mittels der Schwingungen verbessert gedämpft werden können, die eine kleinere Masse als aus dem Stand der Technik bekannte Schwingungsdämpfungsvorrichtungen aufweist, und die besser an sich verändernde Bedingungen anpassen lässt.

Diese Aufgabe wird durch eine Schwingungsdämpfungsvorrichtung mit den Merkmalen von Anspruch 1 gelöst. Vorteilhafte Ausgestaltungen sind in dessen Unteransprüchen beschrieben.

Ferner liegt der vorliegenden Erfindung die Aufgabe zugrunde, eine verbesserte Windkraftanlage bereitzustellen, die im und außerhalb des Betriebs geringere Schwingungsamplituden aufweist.

Diese Aufgabe wird durch eine Windkraftanlage mit den Merkmalen des Anspruchs 14 gelöst. Vorteilhafte Ausgestaltungen sind in dessen Unteransprüchen beschrieben.

Im Genaueren umfasst die erfindungsgemäße Schwingungsdämpfungsvorrichtung eine Lagereinrichtung, die eine konkav geformte Abrollfläche umfasst. Die Schwingungsdämpfungsvorrichtung umfasst ferner einen Rollkörper, der auf der Abrollfläche der Lagereinrichtung gelagert und zumindest in einer Bewegungsebene entlang der Abrollfläche beweglich ist.

Bei dem Rollkörper kann es sich beispielsweise um eine Walze oder um eine Kugel handeln. Die konkav geformte Abrollfläche kann beispielsweise in einer Ebene konkav und in einer dazu senkrecht orientierte Ebene eben ausgebildet sein, also teilzylinderförmig beziehungsweise sattelförmig ausgebildet sein. Alternativ hierzu ist es aber möglich, dass die Abrollfläche teilkugelförmig ausgebildet ist. Weiterhin ist es auch möglich, dass die konkav geformte Abrollfläche paraboloid ausgestaltet ist. Beschränkungen hinsichtlich der konkaven Ausgestaltung der Abrollfläche bestehen insoweit nicht.

Die Masse des Rollkörpers beträgt vorzugsweise zwischen 0,15 % und 0,3 % der modalen Masse der zu dämpfenden Eigenschwingung. Weiter vorzugsweise beträgt die Masse des Rollkörpers zwischen 0,3 % und 0,5 % der modalen Masse der zu dämpfenden Eigenschwingung. Nochmals vorzugsweise beträgt die Masse des Rollkörpers zwischen 0,5 % und 1 % der modalen Masse der zu dämpfenden Eigenschwingung. Höchst vorzugsweise beträgt die Masse des Rollkörpers zwischen 1 % und 2 % der modalen Masse der zu dämpfenden Eigenschwingung.

Da der Rollkörper an sich die gesamte Masse für die Gegenpendelbewegung der Schwingungsvorrichtung in sich vereint, wirkt diese effektiver als beispielsweise eine Gegenpendelmasse in Form eines Wasservolumens. Dadurch ist die Masse des Rollkörpers und somit die Masse der Schwingungsdämpfungsvorrichtung im Vergleich zur aus dem Stand der Technik bekannten Schwingungsdämpfungsvorrichtung verringert. Ferner baut die erfindungsgemäße Schwingungsdämpfungsvorrichtung sehr kompakt, für den als Gegenpendelpasse fungierenden Rollkörper keine Aufhängung an einer Pendelstange oder einem Pendelsein vorgesehen sein muss.

Vorzugsweise weist die Lagereinrichtung zumindest zwei konkav geformte Abrollflächen auf. Die Schwingungsdämpfungsvorrichtung umfasst dann zumindest eine der Anzahl der Abrollflächen entsprechende Anzahl von Rollkörpern, wobei jeder Rollkörper auf einer diesem zugeordneten Abrollfläche gelagert und zumindest in einer Bewegungsebene entlang der entsprechenden Abrollfläche beweglich ist. Die Abrollflächen können in Einbaulage der Schwingungsdämpfungsvorrichtung übereinander und/oder nebeneinander angeordnet sein.

Durch die Bereitstellung von einer Vielzahl von Abrollflächen und einer entsprechenden Anzahl von Rollkörpern kann die Schwingungsdämpfungsvorrichtung verbessert eine Überlagerung von Eigenschwingungen abdämpfen. Bei dem Einsatz einer erfindungsgemäßen Schwingungsdämpfungsvorrichtung in einer Windkraftanlage und Befestigung der Schwingungsdämpfungsvorrichtung in der Gondel der Windkraftanlage kann eine entsprechend ausgebildete Schwingungsdämpfungsvorrichtung so angepasst sein, dass diese zum einen die Schwingungen der Grundfrequenz beziehungsweise die Grundschwingungen und die erste Oberschwingung abdämpft. Die Amplitude der Grundschwingung ist größer als die Amplitude der ersten Oberschwingung, wohingegen die Frequenz der Grundschwingung niedriger ist als die Frequenz der ersten Oberschwingung. Durch entsprechende Anpassung der Lagereinrichtung und der konkaven Abrollflächen und der auf den konkaven Abrollflächen angeordneten Rollkörper können beide Schwingungen der Windkraftanlage wirkungsvoll gedämpft werden.

Vorzugsweise unterscheiden sich die Krümmungen der Abrollflächen voneinander. Wenn die Abrollflächen beispielsweise als Teilkugeln ausgebildet sind, dann unterscheiden sich die Radien der Abrollflächen. Durch eine entsprechende Ausgestaltung der Schwingungsdämpfungsvorrichtung kann diese eine Überlagerung von Eigenschwingungen verbessert abdämpfen beziehungsweise kompensieren.

Vorzugsweise sind auf zumindest einer Abrollfläche zumindest zwei Rollkörper gelagert und zumindest in einer Bewegungsebene entlang der Abrollfläche beweglich. Dadurch wird eine nochmals verbesserte Anpassung der Schwingungsdämpfungsvorrichtung erreicht. Im Allgemeinen kann auf einer Abrollfläche eine Vielzahl von Rollkörpern angeordnet sein, wobei die Rollkörper zueinander identisch ausgebildet sein können oder zueinander unterschiedliche Massen und/oder Durchmesser aufweisen.

Vorzugsweise unterscheiden sich die Durchmesser von zumindest zwei Rollkörpern voneinander.

Gemäß einer weiteren vorteilhaften Ausgestaltung unterscheiden sich die Massen von zumindest zwei Rollkörpern voneinander.

Die entsprechend ausgebildeten Schwingungsdämpfungsvorrichtungen ermöglichen eine nochmals verbesserte Anpassung an gegebene Schwingungsbedingungen, so dass eine entsprechend ausgebildete Schwingungsdämpfungsvorrichtung eine Überlagerung von unterschiedlichen Eigenschwingungen eines Körpers nochmals verbessert kompensieren und abdämpfen kann.

Gemäß einer bevorzugten Ausführungsform umfasst die Schwingungsdämpfungsvorrichtung zumindest einen Rollkörperspeicher, in dem die Rollkörper speicherbar sind. Die Rollkörper sind dabei aus dem Rollkörperspeicher auf der Abrollfläche der Lagereinrichtung positionierbar, und ein auf der Abrollfläche angeordneter Rollkörper ist in dem Rollkörperspeicher wieder aufnehmbar.

Die Speicherung der Rollkörper im Rollkörperspeicher erfolgt beispielsweise durch eine Ablage der Rollkörper im Speicher beziehungsweise im Speichervolumen. Beispielsweise kann im Bodenbereich der Lagereinrichtung unterhalb der Abrollfläche ein Speichervolumen vorgesehen sein, das über eine verschließbare Klappe mit dem durch die Abrollfläche begrenztem Schwingungsvolumen verbunden ist. In diesem Falle bildet die verschließbare Klappe ein Teil der Abrollfläche. Alternativ oder zusätzlich ist es auch möglich, dass die jeweiligen Rollkörper durch eine Greifvorrichtung oberhalb der Lageeinrichtung gespeichert bzw. aufbewahrt sind und mittels der Greifvorrichtung auf der Abrollfläche positionierbar und von dieser wieder entfernbar sind.

Eine entsprechend ausgebildete Schwingungsdämpfungsvorrichtung ist den gegebenen Schwingungsbedingungen nochmals verbessert anpassbar. Insbesondere bei mehreren Abrollflächen und mehreren unterschiedlich ausgebildeten Rollkörpern, die auf den jeweiligen Abrollflächen positionierbar sind, kann ein und dieselbe Schwingungsvorrichtung für unterschiedliche Schwingungskörper verwendet und entsprechend angepasst werden.

Vorzugsweise ist die Lagereinrichtung geschlossen ausgebildet und die Abrollfläche beziehungsweise die Abrollflächen sind jeweils in einem geschlossenen Bewegungsvolumen der Lageeinrichtung angeordnet.

Eine abgeschlossene Lagereinrichtung kann beispielsweise einfach durch einen mit der Lagereinrichtung verbundenen Deckel realisiert werden. Alternativ dazu ist es auch möglich, dass der Rollkörper zwischen zwei parallel versetzt zueinander verlaufenden konkav gebogenen Flächen angeordnet ist. Eine abgeschlossene Lagereinrichtung bietet den Vorteil, dass zum Einen die Rollkörper unabhängig von der Stärke der zu dämpfenden Schwingung aus der Lageeinrichtung nicht verloren gehen können und zum Anderen die Lagereinrichtung vor einer Verschmutzung geschützt ist.

Vorzugsweise ist der Rollkörper beziehungsweise sind die Rollkörpern als Kugeln ausgebildet.

Weiter vorzugsweise ist die Abrollfläche beziehungsweise sind die Abrollflächen der Lagereinrichtung als Teilhohlkugeln beziehungsweise Teilhohlkugeln ausgebildet.

Bei entsprechend ausgebildeten Schwingungsdämpfungsvorrichtungen können Schwingungen nicht lediglich nur in einer Schwingungsebene sondern in beliebigen Schwingungsebenen kompensiert werden.

Vorzugsweise ist die Oberfläche der Abrollfläche beziehungsweise sind die Oberflächen der Abrollflächen und/oder die Oberfläche des Rollkörpers beziehungsweise der Rollkörper aufgeraut, so dass eine Bewegung des Rollkörpers beziehungsweise der Rollkörper auf der Abrollfläche beziehungsweise den Abrollflächen abgebremst wird. Zusätzlich und/oder alternativ kann der Rollkörper / können die Rollkörper beschichtet und/oder mit einem Kunststoffüberzug versehen sein. Die Rauheit der jeweiligen Oberflächen, das heißt der Oberfläche des Rollkörpers und/oder der Oberfläche der Abrollfläche beträgt zwischen 0,02 µm und 1 µm, vorzugsweise zwischen 1 µm und 2 µm, weiter vorzugsweise zwischen 2 µm und 4 µm, weiter vorzugsweise zwischen 4 µm und 10 µm, weiter vorzugsweise zwischen 10 µm und 20 µm, weiter vorzugsweise zwischen 20 µm und 50 µm, weiter vorzugsweise zwischen 50 µm und 100 µm, weiter vorzugsweise zwischen 100 µm und 200 µm, weiter vorzugsweise zwischen 200 µm und 500 µm und weiter vorzugsweise zwischen 500 µm und 1 mm.

Dadurch wird erreicht, dass nach Beendigung einer Schwingungsbewegung der Schwingungsdämpfungsvorrichtung die Rollkörper schneller wieder in ihre Ruheposition überführt werden, so dass die Schwingungsdämpfungsvorrichtung ihrerseits keine Schwingungsbewegung des zu dämpfenden Körpers hervorruft. Vorzugsweise ist in der Abrollfläche beziehungsweise in den Abrollflächen eine Vielzahl von Vertiefungen vorgesehen. Diese Vertiefungen erhöhen die Reibung bei einer Bewegung des Rollkörpers auf der Abrollfläche, so dass einem Schlingern des Rollkörpers entgegengewirkt wird und ferner der Rollkörper früher wieder in seine Ruheposition nach einer Anregung überführt wird.

Vorzugsweise ist die Lagereinrichtung mit einer Flüssigkeit zumindest teilweise gefüllt, so dass eine Bewegung von zumindest einem Rollkörper auf der Abrollfläche beziehungsweise den Abrollflächen durch die Flüssigkeit abgebremst wird. Bei der Flüssigkeit kann es sich beispielsweise um Wasser oder um Öl handeln. Die Rollkörper können sich beispielsweise in einem Volumen befinden, das in Gänze mit Flüssigkeit gefüllt ist. In diesem Fall wird die Bewegung des Rollkörpers auf der Abrollfläche besonders effektiv durch die Flüssigkeit abgebremst, da die Flüssigkeit bei einer Bewegung der Schwingungsdämpfungsvorrichtung selber nicht in Bewegung gerät. Wenn die Lagereinrichtung hingegen nicht in Gänze mit der Flüssigkeit gefüllt ist, dient die Flüssigkeit zusätzlich zum Rollkörper als Pendelkörper zur Reduzierung einer Schwingungsbewegung der Schwingungsdämpfungsvorrichtung.

Eine erfindungsgemäße Windkraftanlage umfasst zumindest ein an einer Rotornabe befestigtes Rotorblatt, wobei die Rotornabe drehbar an einer auf einem Turm angeordneten Gondel befestigt ist. Die Windkraftanlage umfasst ferner eine mit der Windkraftanlage verbundene Schwingungsdämpfungsvorrichtung, die eine Lagereinrichtung mit einer konkav geformten Abrollfläche umfasst und ferner einen Rollkörper umfasst, der auf der Abrollfläche der Lagereinrichtung gelagert und zumindest in einer Bewegungsebene entlang der Abrollfläche beweglich ist. Eine entsprechend ausgebildete Windkraftanlage weist kleinere Schwingungsamplituden bei einer Anregung auf als aus dem Stand dem Stand der Technik bekannte Windkraftanlagen.

Vorzugsweise ist die Schwingungsdämpfungsvorrichtung in der Gondel angeordnet und mit dieser verbunden. Bei Windkraftanlagen ist ein Großteil der Masse in der Gondel konzentriert, so dass diese die größten Schwingungsamplituden der Windkraftanlage aufweist. Eine Anordnung der Schwingungsdämpfungsvorrichtung in der Gondel wirkt den Schwingungsbewegungen der Windkraftanlage besonders wirkungsvoll entgegen.

Vorzugsweise ist zumindest eine Schwingungsdämpfungsvorrichtung in dem Turm angeordnet und mit diesem verbunden. Dabei ist die Schwingungsdämpfungsvorrichtung vorzugsweise in dem Bereich des Turms angeordnet, der die größten Schwingungsauslenkungen aufweist.

Weitere Vorteile, Einzelheiten und Merkmale der Erfindung ergeben sich nachfolgend aus den erläuterten Ausführungsbeispielen. Dabei zeigen im Einzelnen:
- Figur 1:: ein Querschnitt einer schematisch dargestellten Schwingungsdämpfungsvorrichtung gemäß der vorliegenden Erfindung;
- Figur 2:: eine Draufsicht auf die in Figur 1 dargestellte Schwingungsdämpfungsvorrichtung;
- Figur 3:: ein Querschnitt einer schematisch dargestellten Schwingungsdämpfungsvorrichtung gemäß einer alternativen Ausführungsform der vorliegenden Erfindung;
- Figur 4:: ein Querschnitt einer schematisch dargestellten Schwingungsdämpfungsvorrichtung gemäß einer weiteren alternativen Ausführungsform der vorliegenden Erfindung;
- Figur 5:: ein Querschnitt einer schematisch dargestellten Schwingungsdämpfungsvorrichtung gemäß einer weiteren alternativen Ausführungsform der vorliegenden Erfindung;
- Figur 6:: ein Querschnitt einer schematisch dargestellten Schwingungsdämpfungsvorrichtung gemäß einer weiteren alternativen Ausführungsform der vorliegenden Erfindung; und
- Figur 7:: eine Frontalansicht einer schematisch dargestellten Windkraftanlage gemäß der vorliegenden Erfindung.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

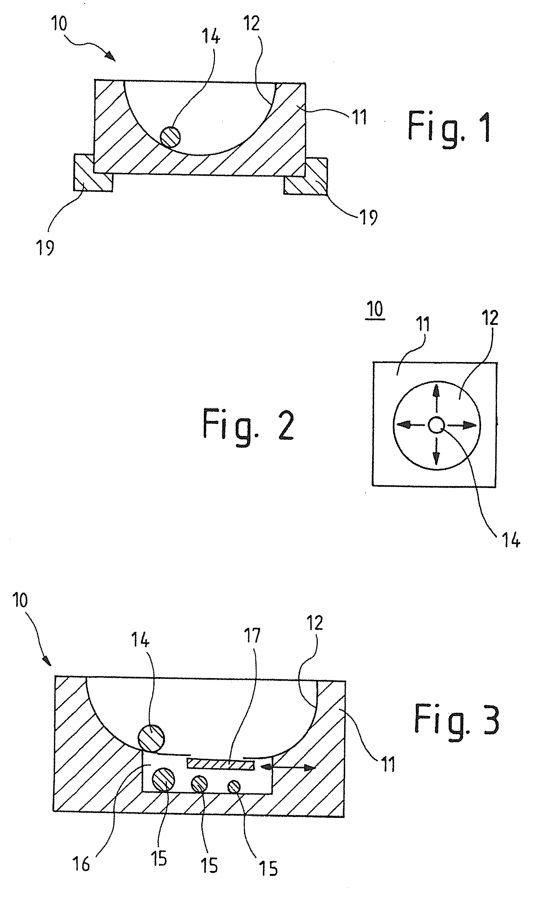

Figur 1 zeigt einen Querschnitt und Figur 2 eine entsprechende Draufsicht einer schematisch dargestellten Schwingungsdämpfungsvorrichtung 10 gemäß der vorliegenden Erfindung. Die Schwingungsdämpfungsvorrichtung 10 umfasst eine Lagereinrichtung 11 mit einer konkav geformten Abrollfläche 12 und einen als Kugel 14 ausgebildeten Rollkörper 14. Die Kugel 14 ist auf der Abrollfläche 12 der Lagereinrichtung 11 gelagert und auf der Abrollfläche 12 frei beweglich. Die Schwingungsdämpfungsvorrichtung 10 ist mittels einer Befestigungsstruktur 19 an einem Körper befestigbar, dessen Schwingungen kompensiert und gedämpft werden sollen.

Bei dem in den Figuren 1 und 2 dargestellten Ausführungsbeispiel ist der Rollkörper 14 als Kugel 14 ausgebildet. Die Abrollfläche 12 ist in dem dargestellten Ausführungsbeispiel als Teilhohlkugel 12 ausgebildet, so dass die Kugel 14, wie durch die in Figur 2 dargestellten Pfeile angedeutet, auf der Abrollfläche 12 frei beweglich ist. Es ist jedoch auch möglich, dass die Abrollfläche 12 der Lagereinrichtung 11 lediglich in einer Ebene konkav und in einer zu dieser senkrecht orientierten Ebene eben ausgebildet ist. In diesem Falle weist die konkav geformte Abrollfläche 12 eine Sattelform beziehungsweise eine Teilzylinderform auf. Bei einer entsprechend ausgebildeten Abrollfläche 12 kann der Rollkörper 14 als Walze 14 ausgebildet sein. Jedoch ist es auch möglich, dass bei einer sattelförmigen beziehungsweise teilzylinderförmigen Abrollfläche 12 auch eine Kugel als Rollkörper 14 fungiert.

Des Weiteren ist die Formgebung der konkav geformten Abrollfläche 14 in keinster Weise beschränkt und kann beispielsweise auch die Form eines Paraboloiden aufweisen.

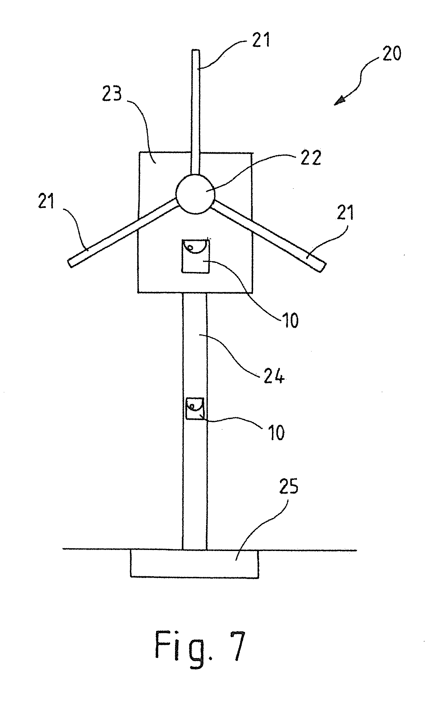

Die Funktionsweise der erfindungsgemäßen Schwingungsdämpfungsvorrichtung 10 ist derart, dass bei Bewegung, insbesondere bei einer Schwingungsbewegung, eines mit der Schwingungsdämpfungsvorrichtung 10 verbundenen Gegenstandes, so wie beispielsweise einer Windkraftanlage 20 (siehe Figur 7) die Lagereinrichtung 11 die Bewegung des mit der Schwingungsdämpfungsvorrichtung 10 verbundenen Gegenstandes mitmacht, die Kugel 14 jedoch aufgrund ihrer Massenträgheit und ihrer Beweglichkeit auf der Abrollfläche 12 diese Bewegung nicht mitmacht. Folglich wird die Kugel 14 relativ zur Abrollfläche 12 ausgelenkt und folgt anschließend aufgrund der auf diese wirkenden Schwerkraft einer Schwingungstrajektorie auf der Abrollfläche 12. Dadurch übt die Kugel 14 auf die Lagereinrichtung 11 und somit auch auf die Struktur, dessen Schwingungen gedämpft werden sollen, eine Kraft aus, die der Schwingungsbewegung der Struktur entgegenwirkt.

Die Frequenz der Schwingungsbewegung der Kugel 14 auf der Abrollfläche 12 hängt von der Krümmung der Abrollfläche 12, beispielsweise von dem Radius der Abrollfläche 12 und von dem Durchmesser der Kugel 14 und der Massenverteilung innerhalb der Kugel 14 ab. Folglich kann die Schwingungsfrequenz der Schwingungsdämpfungsvorrichtung 10 durch eine entsprechende Dimensionierung der Abrollfläche 12 und der Kugel 14 so einem gegebenen System angepasst werden, dass Resonanzfrequenzen beziehungsweise Eigenfrequenzen des Systems durch die erfindungsgemäße Schwingungsdämpfungsvorrichtung 10 gedämpft werden.

Damit nach einer Beendigung einer Schwingungsbewegung der Struktur, mit der die Schwingungsdämpfungsvorrichtung 10 verbunden ist, die Kugel 14 wieder schneller in ihre Ruheposition auf der Abrollfläche 12 überführt wird, kann die Oberfläche der Kugel 14 beziehungsweise des Rollkörpers 14 und/oder die Oberfläche der Abrollfläche 12 aufgeraut sein, wodurch sich der Rollwiderstand des Rollkörpers 14 auf der Abrollfläche 12 erhöht, so dass ein langes Nachschwingen des Rollkörpers 14 vermieden wird.

Weiterhin ist es auch möglich, dass in der Abrollfläche 12 in den Figuren nicht dargestellte Vertiefungen vorgesehen sind, die ebenfalls zu einer Erhöhung des Rollwiderstandes des Rollkörpers 14 auf der Abrollfläche 12 führen.

In Figur 3 ist im Querschnitt eine schematisch dargestellte Schwingungsdämpfungsvorrichtung 10 gemäß einer alternativen Ausführungsform dargestellt. Bei der in Figur 3 dargestellten Schwingungsdämpfungsvorrichtung 10 umfasst diese einen Rollkörperspeicher 16 in Form eines abgeschlossenen Volumens 16, in dem Rollkörper 15 angeordnet sind, also speicherbar sind. Die Rollkörper 15 sind dabei aus dem Rollkörperspeicher 16 auf der Abrollfläche 12 positionierbar, und andersrum ist ein auf der Abrollfläche 12 angeordneter Rollkörper 14, 15 in dem Rollkörperspeicher 16 aufnehmbar. Der Rollkörperspeicher 16 ist von der Abrollfläche 12 durch eine Schiebetür 17 getrennt. Durch Verfahren der Schiebetür 17 kann einer der Rollkörper 15 mittels eines in den Figuren nicht dargestellten Manipulators auf die Abrollfläche 12 positioniert werden. Nach Positionierung des Rollkörpers 15 auf der Abrollfläche 12 kann die Schiebetür 17 wieder in ihre Schließstellung überführt werden und bildet dann einen Teil der Abrollfläche 12. Die auf der Abrollfläche 12 befindlichen Rollkörpern 14 und 15 sind auf der Abrollfläche 12 frei beweglich.

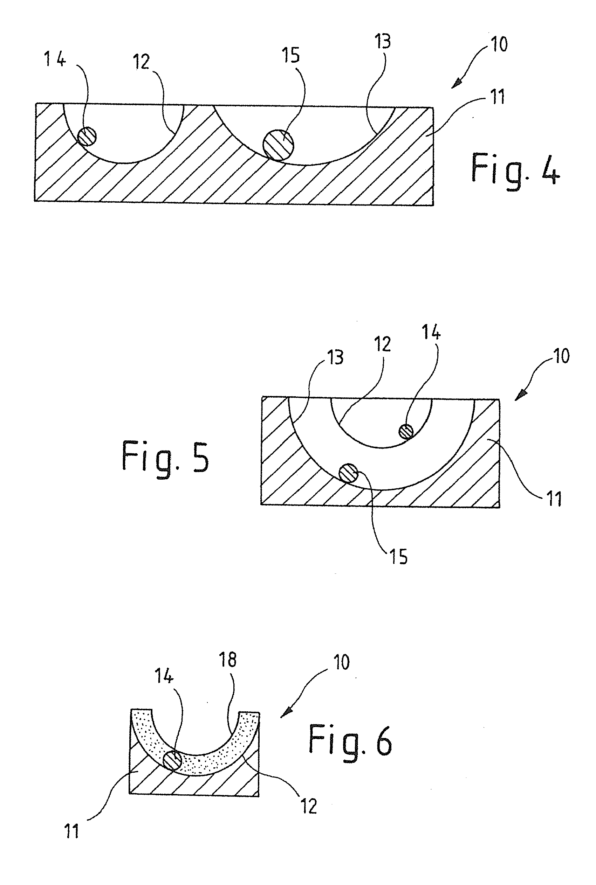

Wie aus den Figuren 4 und 5, die jeweils im Querschnitt schematisch dargestellte Ausführungsformen der erfindungsgemäßen Schwingungsdämpfungsvorrichtung 10 darstellen, ersichtlich ist, kann die Schwingungsdämpfungsvorrichtung 10 eine Lagereinrichtung 11 umfassen, die zumindest zwei konkav geformte Abrollflächen 12, 13 aufweist. In diesem Fall umfasst die Schwingungsdämpfungsvorrichtung 10 zumindest eine der Anzahl der Abrollflächen 12, 13 entsprechende Anzahl von Rollkörpern 14, 15. Ferner ist es auch möglich, dass auf jeder Abrollfläche 12, 13 mehr als lediglich ein Rollkörper 14, 15 angeordnet ist.

Die Rollkörper 14, 15 sind auf der diesen zugeordneten Abrollfläche 12, 13 gelagert und auf den jeweiligen Abrollflächen 12, 13 frei beweglich. Bei dem in Figur 4 dargestellten Ausführungsbeispiel sind die Abrollflächen 12, 13 nebeneinander angeordnet, wobei in dem in Figur 5 dargestellten Ausführungsbeispiel die Abrollflächen 12, 13 übereinander, und damit platzsparend, angeordnet sind.

Aus den Figuren 4 und 5 ist ersichtlich, dass sich die Krümmung der Abrollfläche 12 von der Krümmung der Abrollfläche 13 unterscheidet. Im Genaueren ist die Krümmung der Abrollfläche 12 beziehungsweise der Krümmungsradius der Abrollfläche 12 kleiner als der Krümmungsradius der Abrollfläche 13, so dass die Bewegung eines Rollkörpers 14 auf der Abrollfläche 12 nach Anregung eine höhere Schwingungsfrequenz aufweist als die Schwingungsbewegung eines Rollkörpers 15 auf der Abrollfläche 13. Mittels der in den Figuren 4 und 5 dargestellten Schwingungsdämpfungsvorrichtung 10 können somit unterschiedliche Schwingungszustände beziehungsweise Eigenfrequenzen einer Struktur, beispielsweise eine Windkraftanlage 20, gedämpft werden.

Aus Figur 6, die einen Querschnitt einer Schwingungsdämpfungsvorrichtung 10 gemäß einer weiteren alternativen Ausführungsform der vorliegenden Erfindung zeigt, ist ersichtlich, dass die Schwingungsdämpfungsvorrichtung 10 auch geschlossen ausgebildet sein kann, dass also die Lageeinrichtung 11 geschlossen ausgebildet sein kann. Bei dem in Figur 6 dargestellten Ausführungsbeispiel ist der Rollkörper 14 in einem Bewegungsvolumen zwischen der Abrollfläche 12 und einer zu der Abrollfläche 12 parallel verlaufenden weiteren Fläche frei beweglich. Es ist jedoch auch möglich, dass die Lagereinrichtung 11 schlicht durch einen in den Figuren nicht dargestellten Deckel abgeschlossen ist.

Bei dem in Figur 6 dargestellten Ausführungsbeispiel ist das Bewegungsvolumen mit einer Flüssigkeit 18 gefüllt. Bei dieser Flüssigkeit 18 kann es sich beispielsweise um Wasser und/oder um Öl handeln. Da die Flüssigkeit 18 das Bewegungsvolumen der Lagereinrichtung 11 komplett ausfüllt, führt die Flüssigkeit 18 aufgrund deren Inkompressibilität keine Schwingungsbewegung durch. Daher wirkt die Flüssigkeit 18 einer Bewegung des Rollkörpers 14 aus der Abrollkörper 12 entgegen und bremst folglich die Bewegung des Rollkörpers 14 ab.

Alternativ ist es aber auch möglich, dass die Flüssigkeit 18 das Bewegungsvolumen nicht komplett ausfüllt, so dass die Flüssigkeit 18 auch eine Schwingbewegung durchführen kann. In diesem Fall wirkt die Flüssigkeit 18 zum Einen einer Bewegung des Rollkörpers 14 entgegen und bremst die Bewegung des Rollkörpers 14 ab, und darüber hinaus wirkt die Flüssigkeit 18 dann auch noch als Pendelkörper und wirkt einer Schwingungsbewegung der Struktur, mit der Schwingungsdämpfungsvorrichtung 10 verbunden ist, entgegen.

Figur 7 zeigt eine Frontansicht einer schematisch dargestellten erfindungsgemäßen Windkraftanlage 20. Die Windkraftanlage 20 umfasst drei Rotorblätter 21, die jeweils an einer Rotornabe 22 befestigt sind. Die Rotornabe 22 ist mit einem in Figur 7 nicht dargestellten Generator gekoppelt und bezüglich der Gondel 23 drehbar gelagert. Die Gondel 23, in der auch der nicht dargestellte Generator angeordnet ist, ist auf einem Turm 24 befestigt.

Die in Figur 7 dargestellte Windkraftanlage 20, die auch als Offshore-Windkraftanlage 20 ausgebildet sein kann, ist einer Vielzahl von Kräften ausgesetzt, die die Windkraftanlage 20 in Schwingungen versetzt. Die Drehung der Rotorblätter 21 und der Rotornabe 22 induziert Schwingungen in die Windkraftanlage 20. Weiterhin regt auch Wind, der die Gondel 23 und dem Turm 24 beaufschlagt, die Windkraftanlage 20 zu Schwingungen an. Bei einem Offshore-Einsatz regen Wellen und Gezeitenströmungen, die gegen dem Turm 24 prallen, die Windkraftanlage 20 zu Schwingungen an.

Zur Reduzierung der Schwingungsbewegungen der erfindungsgemäßen Windkraftanlage 20 umfasst diese bei dem in Figur 7 dargestellten Ausführungsbeispiel zwei Schwingungsdämpfungsvorrichtungen 10, wobei eine Schwingungsdämpfungsvorrichtung 10 in der Gondel 23 angeordnet und mit dieser verbunden ist, und eine weitere Schwingungsdämpfungsvorrichtung 10 in dem Turm 24 angeordnet und mit diesem verbunden ist. Die Schwingungsdämpfungsvorrichtungen 10 sind vorzugsweise in den Bereichen der Windkraftanlage 20 angeordnet, die besonders große Auslenkungen bei Schwingungen der Windkraftanlage 20 aufweisen, so dass die Schwingungsdämpfungsvorrichtungen 10 die Schwingungsbewegungen der Windkraftanlage 20 besonders effektiv dämpfen können.

Der Einsatz der erfindungsgemäßen Schwingungsdämpfungsvorrichtung 10 ist selbstverständlich nicht auf Windkraftanlagen 20 beschränkt. Die Schwingungsdämpfungsvorrichtung 10 kann beispielsweise auch in Häusern, insbesondere in Hochhäusern, oder bei Schiffen eingesetzt werden.

### Bezugszeichenliste:

- 10: Schwingungsdämpfungsvorrichtung
- 11: Lagereinrichtung
- 12, 13: (konkav geformte) Abrollfläche
- 14, 15: Rollkörper / Walze / Kugel
- 16: Rollkörperspeicher
- 17: Schiebetür
- 18: Flüssigkeit (in der Lagereinrichtung)
- 19: Befestigungsstruktur
- 20: Windkraftanlage
- 21: Rotorblatt
- 22: Rotornabe
- 23: Gondel
- 24: Turm
- 25: Fundament

## Patentansprüche

1. Schwingungsdämpfungsvorrichtung (10) mit den folgenden Merkmale:
- die Schwingungsdämpfungsvorrichtung (10) umfasst eine Lagereinrichtung (11) mit einer konkav geformten Abrollfläche (12, 13);
- die Schwingungsdämpfungsvorrichtung (10) umfasst einen Rollkörper (14,15); und
- der Rollkörper (14,15) ist auf der Abrollfläche (12, 13) der Lagereinrichtung (11) gelagert und zumindest in einer Bewegungsebene entlang der Abrollfläche (12, 13) beweglich.

2. Schwingungsdämpfungsvorrichtung (10) nach Anspruch 1,
**gekennzeichnet durch** die folgenden Merkmale:
- die Lagereinrichtung (11) weist zumindest zwei konkav geformte Abrollflächen (12, 13) auf;
- die Schwingungsdämpfungsvorrichtung (10) umfasst zumindest eine der Anzahl der Abrollflächen (12, 13) entsprechende Anzahl von Rollkörpern (14, 15); und
- jeder Rollkörper (14,15) ist auf einer diesem zugeordneten Abrollfläche (12, 13) gelagert und zumindest in einer Bewegungsebene entlang der entsprechenden Abrollfläche (12, 13) beweglich.

3. Schwingungsdämpfungsvorrichtung (10) nach Anspruch 2, **dadurch gekennzeichnet, dass** die sich die Krümmungen von zumindest zwei Abrollflächen (12, 13) voneinander unterscheiden.

4. Schwingungsdämpfungsvorrichtung (10) nach einem der vorhergehenden Ansprüche, **dadurch gekennzeichnet, dass** auf zumindest einer Abrollfläche (12, 13) zumindest zwei Rollkörper (14,15) gelagert und zumindest in einer Bewegungsebene entlang der Abrollfläche (12, 13) beweglich sind.

5. Schwingungsdämpfungsvorrichtung (10) nach einem der Ansprüche 2 bis 4, **dadurch gekennzeichnet, dass** sich die Durchmesser und/oder die Massen von zumindest zwei Rollkörpern (14, 15) voneinander unterscheiden.

6. Schwingungsdämpfungsvorrichtung (10) nach einem der vorhergehenden Ansprüche, **gekennzeichnet durch** die folgenden Merkmale:
- die Schwingungsdämpfungsvorrichtung (10) umfasst zumindest einen Rollkörperspeicher (16), in dem die Rollkörper (14,15) speicherbar sind;
- die Rollkörper (14,15) sind aus dem Rollkörperspeicher (16) auf der Abrollfläche (12, 13) der Lagereinrichtung (11) positionierbar; und
- ein auf der Abrollfläche (12, 13) angeordneter Rollkörper (14,15) ist in dem Rollkörperspeicher (16) aufnehmbar.

7. Schwingungsdämpfungsvorrichtung (10) nach einem der vorhergehenden Ansprüche, **dadurch gekennzeichnet, dass** die Lagereinrichtung (11) geschlossen ausgebildet ist und die Abrollfläche (12, 13) / Abrollflächen (12, 13) jeweils in einem geschlossenem Bewegungsvolumen der Lagereinrichtung (11) angeordnet ist / sind.

8. Schwingungsdämpfungsvorrichtung (10) nach einem der vorhergehenden Ansprüche, **dadurch gekennzeichnet, dass** die Abrollfläche (12, 13) / die Abrollflächen (12, 13) der Lagereinrichtung (11) als Teilhohlkugel (12, 13) / Teilhohlkugeln (12, 13) ausgebildet ist / sind.

9. Schwingungsdämpfungsvorrichtung (10) nach einem der vorhergehenden Ansprüche, **dadurch gekennzeichnet, dass** die Oberfläche der Abrollfläche (12, 13) / der Abrollflächen (12, 13) und/oder die Oberfläche des Rollkörpers (14, 15) / der Rollkörper (14,15) aufgeraut ist/sind, und/oder dass in der Abrollfläche (12, 13) / den Abrollflächen (12, 13) und/oder der Oberfläche des Rollkörper (14, 15) / der Rollkörper (14, 15) jeweils eine Vielzahl von Vertiefungen vorgesehen ist.

10. Schwingungsdämpfungsvorrichtung (10) nach einem der vorhergehenden Ansprüche, **dadurch gekennzeichnet, dass** die Lagereinrichtung (11) mit einer Flüssigkeit (18) zumindest teilweise gefüllt ist, so dass eine Bewegung von zumindest einem Rollkörper (14,15) auf der Abrollfläche (12, 13) / den Abrollflächen (12, 13) durch die Flüssigkeit abgebremst wird.

11. Windkraftanlage (20) mit zumindest einem Rotorblatt (21), das an einer Rotornabe (22) befestigt ist, wobei die Rotornabe (22) drehbar an einer auf einem Turm (24) angeordneten Gondel (23) befestigt ist, **dadurch gekennzeichnet, dass** die Windkraftanlage (20) zumindest eine mit der Windkraftanlage (20) verbundene Schwingungsdämpfungsvorrichtung (10) nach einem der vorhergehenden Ansprüche umfasst.

12. Windkraftanlage (20) nach Anspruch 11, **dadurch gekennzeichnet, dass** zumindest eine Schwingungsdämpfungsvorrichtung (10) in der Gondel (23) angeordnet und mit dieser verbunden ist und/oder zumindest eine Schwingungsdämpfungsvorrichtung (10) in dem Turm (24) angeordnet und mit diesem verbunden ist.
